# EUROPÄISCHE PATENTSCHRIFT

(11) **EP 0 791 618 B1**
(45) Veröffentlichungstag und Bekanntmachung des Hinweises auf die Patenterteilung: **21.11.2001**
(21) Anmeldenummer: 97101003.8
(22) Anmeldetag: 23.01.1997
(51) Int. Cl.: C08J 5/04, C08J 5/24, C08G 69/18, C08G 69/20

(54) **Verfahren zur Herstellung von thermisch nachverformbaren Verbundwerkstoffen mit Polylactam-Matrix**
Process for preparing thermally reshapable composite materials with polylactam matrix
Procédé pour préparer des matériaux composites formables à chaud comprenant une matrice de polylactam

(30) Priorität: 25.01.1996 DE 19602638
(43) Veröffentlichungstag der Anmeldung: 27.08.1997
(73) Patentinhaber: EMS-INVENTA AG, 8002 Zürich (CH)
(72) Erfinder: Schmid, Eduard, Dr. sc. nat., 7402 Bonaduz (CH); Eder, Roman, 70794 Filderstadt (DE); Wild, Urs, 7013 Domat/Ems (CH)
(74) Vertreter: Hotz, Klaus, Dipl.-El.-Ing./ETH

(56) Entgegenhaltungen:
- CH-A- 432 828
- DE-A- 2 801 990
- DE-A- 4 033 414
- DE-A- 4 328 882
- US-A- 3 562 221

## Beschreibung

Die Erfindung betrifft ein Verfahren zur Herstellung von thermisch nachverformbaren Verbundwerkstoffen durch die aktivierte anionische Polymerisation bestehend aus einer ein Verstärkungsfaserngebilde umschliessenden Matrix aus Polylactam.

Pultrusionsprofile, Organobleche, Hohlkörper und Behälter sowie Halbzeuge mit faserverstärkten Geflechten, Gelegen, Faser- oder Filament-Geweben und Rovings und einer Duroplast-Matrix, zum Beispiel aus Polyester- oder Epoxid-Harz haben in einem wachsenden Markt vielfältige Anwendungen gefunden. Solche Verbundkörper mit einer, die textile Verstärkung vollständig umschliessenden Matrix, zeichnen sich durch gute Dimensionsstabilität und unter Feuchtigkeitseinfluss weitgehend konstante Eigenschaften, eine hohe Beständigkeit gegen wässrige Systeme, Fette, Öle, Treibstoffe und Alkohole aus, widerstehen Umwelteinflüssen und sind auch hinreichend thermisch beständig.

Grundprinzip für die Herstellung ist dabei eine möglichst einwandfreie Imprägnation der textilen Verstärkungsgebilde mit einer hochfliessfähigen Schmelze mit anschliessender Formgebung und Aushärtung, vorzugsweise unter Hitze- und Druckeinwirkung. Die vielfach notwendige Nachverformung ist für eine Duroplast-Matrix allerdings nicht möglich.

Für die Herstellung von Verbundwerkstoffen mit thermoplastischer Matrix erweist sich deren hohe Schmelzeviskosität für die vollständige Benetzung und Imprägnation der Verstärkungsgebilde als sehr schwierig.
Trotz Hitze- und Druckeinwirkung werden die Verstärkungsfasern meist ungenügend umschlossen und Gaseinschlüsse nicht vollständig beseitigt.

Ein Verfahren zur Herstellung von füllstoffhaltigen Guss-Formkörpern aus anionisch polymerisiertem Lactam, speziell von Lactam-6 wird in der **DE-A-28 01 990** beschrieben. Die der Lactamschmelze zugemischten Füllstoffe sollen den für Gusspolyamiden bekannten, störenden grossen Schwund der Formkörper reduzieren. Die aktivierte anionisch katalysierte Lactam-Polymerisation wird darin jedoch gemäss altbekanntem Stand der Technik unter Verwendung von zwei getrennten Laktamschmelzen durchgeführt, von denen die eine den Katalysator und die andere den Aktivator enthält.

Es bestand daher die Aufgabe, ein technisch einfaches und sicheres Verfahren zur Herstellung von verstärkten, thermisch nachverformbaren Verbundwerkstoffen mit einer Polylactam-Matrix mit konstanten Eigenschaften zur Verfügung zu stellen.

Diese Aufgabe wird durch das Verfahren zur Herstellung von thermisch nachverformbaren Verbundwerkstoffen mit einer die Verstärkungsfasergebilde umschliessenden Matrix aus Polylactam mit den kennzeichnenden Merkmalen gemäss Anspruch **1** gelöst.

Sie wird insbesondere gelöst durch ein Verfahren, in dem eine aktivator- und katalysatorhaltige Lactamschmelze im noch niederviskosen Zustand zu Beginn der aktivierten anionischen Lactampolymerisation die Verstärkungsfasergebilde durchdringt und vollständig umschliesst und später, im polymerisierten und festen Zustand die thermoplastische Matrix des Verbundwerkstoffes bildet und dadurch dessen Nachverformbarkeit ermöglicht.

Dabei ist die katalytisch aktivierte Lactamschmelze aus Lactam und 0,5 bis 15 Gew.-Teilen eines Flüssigsystemes hergestellt, das gleichzeitig den Aktivator und den Katalysator gelöst enthält.

Das Flüssigsystem besteht im wesentlichen aus
a) 30 bis 80 Gew.-Teilen
   a1) mindestens einer N-disubstituierten Carbonsäureamid-Verbindung und/oder
   a2) mindestens einer N,N'-disubstituierten Harnstoff-Verbindung,
   die wahlweise beide einen durch ihre Substituenten gebildeten heterocyclischen Ring enthalten, als Lösungsmittel,
b) 5 bis 40 Gew.-Teilen mindestens eines Alkali- oder Erdalkali-Lactamats als Katalysator,
c) 5 bis 40 Gew.-Teilen mindestens einer, die alkalische Lactampolymerisation aktivierenden Verbindung,
   wobei sich a), b) und c) zu 100 Gew.-Teilen ergänzen, und wahlweise zusätzlich aus
d) Additiven,

N,N'-disubstituierte Harnstoff-Verbindungen a2) sind bekannte Verbindungen und beispielsweise in der BASF-Firmenschrift *"BASF-Zwischenprodukte 1993"* beschrieben.

Ebenfalls geeignete N-disubstituierte Carbonsäureamid-Verbindungen a1) und Lactamate b) sind in der ***US-PS 3,575,938*** beschrieben.

Bevorzugte aktivierende Verbindungen c) sind verkappte, bevorzugt mit Lactam oder Hydroxi-Fettalkyloxazolinen verkappte Isocyanate und Polyisocyanate, Carbodiimide und Polycarbodiimide.

Bevorzugt eingesetzte Lactame sind Caprolactam, Önantholactam, Laurinlactam und ihre Gemische.

Als Verstärkungsfaser-Gebilde werden eingesetzt:
Gewirke, Gewebe, Geflechte, Gestricke, Gesticke, Gelege, Vliese, Faserkabel und Rovings Glas-, Mineral-, Asbest-, Aramid- und Kohlefasern, welche weitestgehend von Feuchtigkeit befreit sein müssen.

Das erfindungsgemässe Verfahren zeichnet sich durch folgende wesentliche Vorteile aus:
- Es kann von einer reinen, trockenen Lactamschmelze, die keinen Alterungsproblemen unterworfen ist, ausgegangen werden,
- Das eingesetzte Flüssigsystem, welches sowohl Aktivator als auch Katalysator enthält, besitzt eine hohe Lagerstabilität und ist bei erhöhten Temperaturen und auch bei Raumtemperatur gut dosierbar und wird dem Lactam erst unmittelbar vor Beginn der Polymerisationsreaktion zugesetzt.
- Die rasch ausgelöste aktivierte anionische Lactampolymerisation ist reproduzier- und über Temperatur und die Aktivator/Katalysator-Konzentration des Flüssigsystems in ihrer Geschwindigkeit steuerbar.
- Die bei Polymerisationsbeginn noch niederviskose Lactamschmelze benetzt und durchdringt die Verstärkungsfasergebilde gut, so dass Störstellen durch Gaseinschlüsse oder geschädigte Verstärkungsfasern weitgehend vermieden werden.

Das ist besonders für Gebilde mit einem hohen Volumenanteil an enggepackten Verstärkungsfasern, wie die beanspruchten Gewirke, Gewebe, Geflechte, Gestricke, Gelege und Vliese, aber auch für kompakte Faserstränge, -Kabel und -Rovings sehr vorteilhaft.

Es lassen sich so Verbundwerkstoffe mit einem hohen Volumenanteil an einwandfrei in die Matrix eingebundenen Verstärkungsfasergebilden herstellen.

Besonders vorteilhaft lässt sich das erfindungsgemässe Verfahren für die kontinuierliche Herstellung von Verbundwerkstoffen einsetzen.

Im Gegensatz dazu sind für Verbundwerkstoffe nach dem Stand der Technik, die mit polymerer, hochviskoser Polyamidschmelze hergestellt werden, in der Regel hoher Druck, hohe Temperaturen und deutlich längere Verfahrenszeiten nötig, die alle die Gefahr von Schädigungen im Verbundwerkstoff erhöhen.

Im erfindungsgemässen Verfahren ist die volumenkonstante Zudosierung und Durchmischung des Flüssigsystems mit der niederviskosen Lactamschmelze leicht durchführbar.

Die Zugabe der Additive kann wahlweise direkt in die Lactamschmelze, zusammen mit dem Flüssigsystem und/oder direkt in die aktivierte, bevorzugt noch niederviskose Schmelze erfolgen.

Für kontinuierliche Verfahrensvarianten eignen sich dazu sog. Static-Mixer, beispielsweise solche der Fa Sulzer, Winterthur (CH) oder bewegte Mischköpfe, beispielsweise solche der Fa. Dosiplast, Balzers (FL).

Die Polymerisation wird in bevorzugter Weise durch die Konzentration von Aktivator und Katalysator im Flüssigsystems, die Art des Aktivators und die Reaktionstemperatur gesteuert.
Dabei wird zur Beschleunigung der Reaktionsgeschwindigkeit die Reaktionstemperatur nach der Durchdringung des Fasergebildes maximal auf 300°C erhöht.

In bevorzugten Verfahrensvarianten erfolgt die Formgebung kontinuierlich.
Dabei ist das Pultrusionsverfahren für Profile, Platten und Rohre besonders bevorzugt.

In besonderen Verfahrensvarianten erfolgt die Polymerisation mindestens teilweise während der Formgebung.

Die Verbundwerkstoffe können thermisch nachgeformt, miteinander oder mit anderen Teilen aus derselben oder ähnlicher, verträglicher Matrix verbunden, z.B. thermisch verschweisst und dadurch einer vielfältigen Formgebung unterworfen werden.

Die erfindungsgemässen Verbundwerkstoffe werden vorteilhaft als Formkörper eingesetzt. Dabei sind Profile für Kabel- und Leitungsabdeckungen, Strukturprofile für die Leichtbauweise, Rahmenelemente von Steuerkästen, Apparaten und Maschinen bevorzugt.
Plattenförmige Elemente können vorteilhaft unter Mitverwendung beheizter Presswalzen hergestellt werden.

Eine bevorzugte Variante des erfindungsgemässen Verfahrens ist die Herstellung von langfaserverstärktem Granulat, das aufgrund der thermoplastischen Matrix z.B. im Spritzguss- oder im Extrusions-Verfahren weiter verarbeitet werden kann. Wird dabei unter weitgehender Vermeidung von Faserschädigung, z.B. durch Scherung gearbeitet, so resultieren Formkörper mit hervorragenden mechanischen Eigenschaften.

Auch für das sogenannte Resin-Transfer- Moulding-Verfahren und das Rotationsguss-Verfahren, bevorzugt unter Verwendung von verstärkenden Fasergebilden, ist das erfindungsgemässe Verfahren hervorragend geeignet.

Bevorzugte Nachverformungen unter mindestens teil- oder abschnittweiser Druck-,Vakuum oder Wärmeeinwirkung auf die Formkörper, wahlweise bis zum oder über den Schmelzpunkt der Matrix, sind z.B. Falzen, 3-dimensionale Formgebung durch Pressen oder Schweissen.

## Patentansprüche

1. Verfahren zur Herstellung von thermisch nachverformbaren faserverstärkten Verbundwerkstoffen mit einer Matrix aus Polylactam wobei ein bei Raumtemperatur lagerstabiles Flüssigsystems zu einer wasserfreien Lactamschmelze zudosiert und mit dieser homogen vermischt wird, nachfolgend das so aktivierte Lactam im niederviskosen Zustand zu Beginn der Polymerisation das Verstärkungsfasergebilde vollständig durchdringt und umschliesst, anschliessend Weiterpolymerisation und Formgebung erfolgen und sich gegebenenfalls eine Nachverformung und/oder thermische Nachbehandlung anschliessen,
**dadurch gekennzeichnet, dass**
die Polymerisation durch Zugabe eines lagerstabilen und bei Raumtemperatur flüssigen Systems, welches Aktivator und Katalysator enthält, ausgelöst wird, wobei das Flüssigsystem im wesentlichen aus
a) 30 bis 80 Gew.-Teilen
a1) mindestens einer N-disubstituierten Carbonsäureamid-Verbindung und/oder
a2) mindestens einer N,N'-disubstituierten Harnstoff-Verbindung,
die gegebenenfalls beide einen durch ihre Substituenten gebildeten heterocyclischen Ring enthalten können, als Lösungsmittel,
b) 5 bis 40 Gew.-Teilen mindestens eines Alkali- oder Erdalkali-Lactamats als Katalysator,
c) 5 bis 40 Gew.-Teilen mindestens einer die anionische Lactampolymerisation aktivierenden Verbindung,
besteht, wobei sich a), b) und c) zu 100 Teilen ergänzen und gegebenenfalls
d) Additiven
besteht.

2. Verfahren nach Anspruch 1,
**dadurch gekennzeichnet, dass**
das Polylactam Polycaprolactam, Polyönantholactam, Polylaurinlactam oder ihr Gemisch ist.

3. Verfahren nach einem der vorgehenden Ansprüche,
**dadurch gekennzeichnet, dass**
0.5 bis 15 Gew. Teile des Flüssigsystems zu 100 Gew. Teilen Lactamschmelze zugemischt werden.

4. Verfahren nach Anspruch 1 oder 2,
**dadurch gekennzeichnet, dass**
das Verstärkungsfasergebilde ausgewählt ist aus der Gruppe Faserkabel, Roving, Gewebe, Gewirke, Gestricke, Gesticke, Gelege und Geflechte oder Kombinationen davon.

5. Verfahren nach einem der Ansprüche 1 bis 3,
**dadurch gekennzeichnet, dass**
die Verstärkungsfasern aus der Gruppe Glas-, Mineral-, Asbest-, Aramid- und Kohlefasern ausgewählt sind.

6. Verfahren nach einem der voranstehenden Ansprüche,
**dadurch gekennzeichnet, dass**
die Reaktionstemperatur bei der Polymerisation nach der Durchdringung des Fasergebildes 300°C nicht übersteigt.

7. Verfahren nach einem der voranstehenden Ansprüche,
**dadurch gekennzeichnet, dass**
die Formgebung kontinuierlich in einem Werkzeug unter Bildung von Profilen, Platten, Rohren oder der Bildung kompakter, granulierbarer Strangprofile erfolgt.

8. Verfahren nach einem der voranstehenden Ansprüche,
**dadurch gekennzeichnet, dass**
die Formgebung durch ein Resin-Transfer-Molding-Verfahren oder im Rotationsguss Verfahren erfolgt.

9. Verfahren nach einem der voranstehenden Ansprüche,
**dadurch gekennzeichnet, dass**
die Nachverformung unter Wärme- und/oder Druck- beziehungsweise Vakuum-Einwirkung erfolgt.

## Claims

1. Method of manufacturing thermally postformable fibre-reinforced composite materials with a polylactam matrix, a fluid system stable when stored at room temperature being added by metering to an anhydrous molten lactam mass and mixed homogeneously with it, the lactam thus activated then completely permeating and enclosing the reinforcing fibre structure in the low-viscosity state at the beginning of polymerisation, further polymerisation and moulding then occurring and being followed if applicable by postforming and/or thermal after-treatment, **characterised in that** polymerisation is triggered by addition of a system which is stable when stored and is fluid at room temperature and contains activator and catalyst, the fluid system consisting essentially of
a) 30 to 80 parts by weight of
a1) at least one N-disubstituted carboxylic acid amide compound and/or
a2) at least one N,N'-disubstituted urea compound,
both of which if applicable can contain a heterocyclic ring formed by their substituents, as solvent,
b) 5 to 40 parts by weight of at least one alkali lactamate or earth alkali lactamate as catalyst,
c) 5 to 40 parts by weight of at least one anionic lactam polymerisation activating compound,
a), b) and c) adding up to 100 parts,
and if applicable
d) additives.

2. Method according to Claim 1, **characterised in that** the polylactam is polycaprolactam, polyenantholactam, polylaurolactam or a mixture thereof.

3. Method according to one of the preceding claims, **characterised in that** 0.5 to 15 parts by weight of the fluid system are mixed into 100 parts by weight of molten lactam mass.

4. Method according to Claim 1 or 2, **characterised in that** the reinforcing fibre structure is selected from the group consisting of fibre cable, roving, woven textile, knitted fabrics, embroidered fabrics, folded fabrics and plaited fabrics or combinations thereof.

5. Method according to Claims 1 to 3, **characterised in that** the reinforcing fibres are selected from the group consisting of glass, mineral, asbestos, aramide and carbon fibres.

6. Method according to one of the preceding claims, **characterised in that** the reaction temperature during polymerisation after permeation of the fibre structure does not exceed 300°C.

7. Method according to one of the preceding claims, **characterised in that** forming is carried out continuously in a tool, profiles, sheets, tubes or compact, granulable extruded sections being formed.

8. Method according to one of the preceding claims, **characterised in that** forming is carried out by a resin-transfer moulding process or in a rotational casting process.

9. Method according to one of the preceding claims, **characterised in that** postforming is carried out by the application of heat and/or pressure or vacuum effect.

## Revendications

1. Procédé de fabrication de matériaux composites renforcés par fibres et postformables à chaud, comprenant une matrice de polylactame, un fluide, stable au stockage à température ambiante, étant ajouté de façon dosée à un bain de lactame sans eau et mélangé à ce dernier de façon homogène, le lactame ainsi activé pénétrant dans et entourant ensuite complètement, dans un état de basse viscosité, le produit des fibres de renfort au début de la polymérisation, cette dernière étant ensuite poursuivie et un façonnage étant alors effectué, éventuellement suivi d'un postformage et/ou d'un post-traitement thermique,
**caractérisé en ce que**
la polymérisation est déclenchée par l'addition d'un système stable au stockage et fluide à température ambiante, comprenant un accélérateur et un catalyseur, ce fluide étant essentiellement composé de
a) 30 à 80 parties en poids
a1) d'au moins un composé N-di-substitué amide de l'acide carbonique et/ou
a2) d'au moins un composé N,N'-di-substitué de l'urée,
pouvant éventuellement tous deux contenir un composé hétérocyclique formé par leurs substituants et servant de solvant,
b) 5 à 40 parties en poids d'au moins un lactamate alcalin ou alcalino-terreux servant de catalyseur,
c) 5 à 40 parties en poids d'un composé activant la polymérisation anionique du lactame,
a), b) et c) se complétant pour former 100 parties en poids,
et éventuellement
e) des additifs.

2. Procédé selon la revendication 1,
**caractérisé en ce que**
le polylactame est constitué de polycaprolactame, de polylactame oenanthique, de polylactame laurique ou d'un mélange de ces composés.

3. Procédé selon l'une des revendications précédentes,
**caractérisé en ce que**
0,5 à 15 parties en poids du fluide sont mélangées à 100 parties en poids du bain de lactame.

4. Procédé selon la revendication 1 ou 2,
**caractérisé en ce que**
le produit des fibres de renforcement est choisi dans la famille des câbles à fibres, stratifils, tissus, tissus à mailles, canevas, nappes et tressages ou des combinaisons de ces produits.

5. Procédé selon l'une des revendications 1 à 3,
**caractérisé en ce que**
les fibres de renforcement sont choisies dans la famille des fibres de verre, minérales, d'amiante, aramides et de carbone.

6. Procédé selon l'une des revendications précédentes,
**caractérisé en ce que**
lors de la polymérisation, après la pénétration dans le produit des fibres, la température de la réaction ne dépasse pas 300° C.

7. Procédé selon l'une des revendications précédentes,
**caractérisé en ce que**
le façonnage se fait de façon continue dans un outil, avec formation de profilés, de plaques, de tubes ou avec formation de profilés en barres compacts et pouvant être granulés.

8. Procédé selon l'une des revendications précédentes,
**caractérisé en ce que**
le façonnage se fait par un procédé d'injection sous vide ou de moulage rotatif.

9. Procédé selon l'une des revendications précédentes,
**caractérisé en ce que**
le postformage se fait sous l'action de la chaleur et/ou de la pression, ou bien sous celle du vide.
